# EUROPEAN PATENT APPLICATION

(11) **EP 1 435 723 A1**
(43) Date of publication of application: **07.07.2004**
(21) Application number: 03425002.7
(22) Date of filing: 03.01.2003
(51) Int. Cl.: H04M 11/02

(54) **Intercommunication device with door-opening action**

(71) Applicant: Urmet Domus S.p.A., 10154 Torino (IT)
(72) Inventor: Minarelli, Giorgio, 10129 Torino (IT)
(74) Representative: Spandonari, Carlo

(57) **Abstract**

An intercommunication device, for installation outside a building served by a telephone network, comprises a mobile-network telephone unit provided with a calling decoder having a keyboard, and programmed to decode a code dialed on the keyboard into a telephone number belonging to a telephone apparatus within the building; a microphone; a loudspeaker; an opening decoder programmed for receiving control signals from the telephone unit; and a supply unit, all interconnected with the telephone unit.

## Description

This invention is concerned with an intercommunication device having a door-opening action.

Intercommunication systems are well known which allow residents of apartment buildings to communicate with callers waiting outside, and also to open the main door or gate. With these systems, the caller announces himself through an intercommunication apparatus having a keyboard for calling the individual apartments, which is arranged near the main gate, and the resident replies via an intercommunication apparatus in the apartment, including a door-opening pushbutton.

Since both the connections beween the indoor and the outdoor intercommunication devices, as well as the electric supply to the outdoor device, require electric conductors extending to the area of the main gate, the installation of such conductors involves carrying out destructive operations such as wall-breaking, excavations, etc. in the building and/or in the surrounding court or garden. These operations are often inappropriate or unduly expensive, e.g. in the case of buildings surrounded by very wide or historically interesting parks or courts, whose integrity and original condition it is desirable to maintain.

For the above reasons, it has been proposed to use the telephone cables to accomplish intercommunication functions. Although this approach partly overcomes the above problems, since it avoids masonry work in the building by using the pre-existing telephone network, the problem is still extant of laying telephone and electric supply cables to the gate, as well as cables to control opening of the gate.

It is therefore the main object of this invention to provide an intercommunication device with door-opening fucntions, which can be adapted to any kind of building, without requiring destructive work for installation and without requring changes to the electric conductors existing within the premises.

The above and other objects and advantages, such as will appear below, are achieved by an intercommunication device having the features set out in claim 1, the subordinate claims defining other advantageous features.

The invention will now be disclosed in more detail, as shown by way of non-limiting example in the attached drawing, wherein:

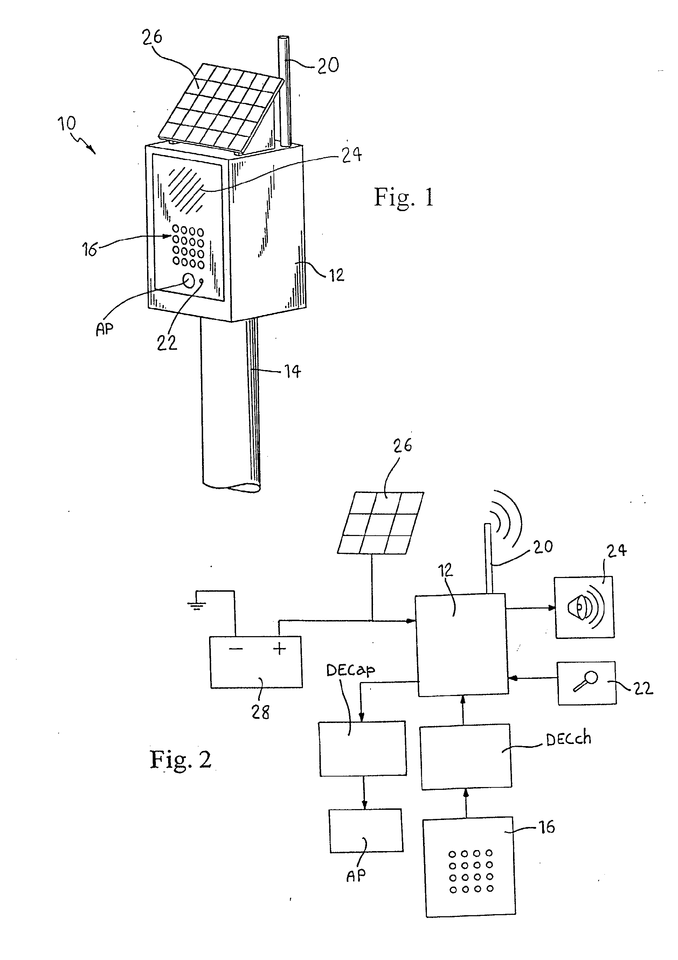

- Fig. 1: is a perspective view of a device according to the invention; and
- Fig. 2: is a block diagram of the device of Fig. 1.

With reference to the above-listed Figures, an intercommunication device 10 according to the invention may be located outside a door or gate closing a condominial ground, and comprises a mobile telephone unit 12, preferably under GSM technology (or other similar technology such as GPRS, etc.), supported on a pillar 14. Telephone unit 12 is connected with a calling decoder DECch, provided with a keyboard 16 (whose operation is described below), with an aerial 20, a microphone 20, a loudspeaker 24 and a gate-opening pushbutton AP, enabled by an opening decoder DECap. Telephone unit 12 is supplied from a solar-energy panel 26, connecte for charging a battery 28.

A caller wishing to call an apartment within the apartment building dials a numeric code on keyboard 16 and the code is transmitted to calling decoder DECch. The latter translates the numeric code into a telephone number belonging to the telephone of the apartment resident, which is called via telephone unit 12. The resident lifts the handset of his cabled telephone, communicates with the caller and, if he wishes to allow him to open the gate, dials an opening code on his telephone, which code is transmitted to telephone unit 12 and is decoded by opening decoder DECap, which in turn enables the gate-opening button AP. As an alternative, the gate-opening code dialed by the resident may be directly converted by opening decoder DECap into a gate-opening electric pulse.

Although a supply provided by a solar panel is presently preferred, because it allows the designer to dispense with both telephone cables and electric cables, it obviously falls within the scope of the invention to supply the device from the electric power network or from a simple battery to be replaced at intervals, i.e. the use of solar panel 26 is a preferred though not indispensable feature in carrying out the invention.

While a preferred embodiment of the invention has been disclosed above, it is understood that a person skilled in the art, depending on requirements, may provide a number of changes within the scope of the same inventive concept.

## Claims

1. Intercommunication device for installation outside a building served by a telephone network, **characterized in that** it comprises a mobile-network telephone unit (12) and
- a calling decoder (DECch) having a keyboard (16), and programmed to decode a code dialed on the keyboard to a telephone number belonging to a telephone apparatus within the building,
- a microphone (22),
- a loudspeaker (24),
- an opening decoder (DECap) programmed to receive control signals from the telephone unit (12), and
- a supply unit (26, 28),
all interconnected with the telephone unit.

2. The device of claim 1, **characterized in that** said opening decoder (DECap) is programmed to convert said control signals to a signal enabling an opening pushbutton for a door and/or gate (AP), provided on the device.

3. The device of claim 1, **characterized in that** said opening decoder (DECap) is programmed to convert said control signals to electric pulses for opening a door and/or gate.

4. The device of any of claims 1 to 3, **characterized in that** said supply unit comprises a battery (28) chargeable by a solar-energy panel (26).

5. The device of any of claims 1 to 4, **characterized in that** said telephone unit (12) is in GSM technology.
